# EUROPÄISCHE PATENTSCHRIFT

(11) **EP 2 458 342 B1**
(45) Veröffentlichungstag und Bekanntmachung des Hinweises auf die Patenterteilung: **26.11.2014**
(21) Anmeldenummer: 11182165.8
(22) Anmeldetag: 21.09.2011
(51) Int. Cl.: G01D 5/245

(54) **Überwachungseinheit und Verfahren zur Überwachung von Positionssignalen inkrementaler Positionsmesseinrichtungen**
Monitoring unit and method for monitoring position signals of incremental position measuring devices
Unité de surveillance et procédé de surveillance de signaux de position de dispositifs de mesure de position incrémentaux

(30) Priorität: 29.11.2010 DE 102010062123; 20.09.2011 DE 102011083042
(43) Veröffentlichungstag der Anmeldung: 30.05.2012
(73) Patentinhaber: Dr. Johannes Heidenhain GmbH, 83301 Traunreut (DE)
(72) Erfinder: Joachimsthaler, Ingo, Dr., 83278 Traunstein (DE); Müller, Thomas, Dr., 83358 Seebruck (DE); Schürmann, Thomas, 83026 Rosenheim (DE)

(56) Entgegenhaltungen:
- EP-A1- 0 872 714
- DE-A1-102004 045 849

## Beschreibung

Die Erfindung betrifft eine Überwachungseinheit, sowie ein Verfahren zur Überwachung von Positionssignalen inkrementaler Positionsmesseinrichtungen. Eine solche Überwachungseinheit, bzw. ein derartiges Verfahren erlaubt es, Fehler von Positionssignalen bereits in der Positionsmesseinrichtung zu erkennen.

Inkrementale Positionsmesseinrichtungen sind insbesondere bei Werkzeugmaschinen und in der Automatisierungstechnik weit verbreitet. Sie dienen zur Bestimmung der Relativposition zweier zueinander beweglicher Objekte. Dabei unterscheidet man prinzipiell zwischen Längen- und Winkelmessgeräten. Längenmessgeräte dienen beispielsweise zur Bestimmung der Relativposition zweier zueinander beweglicher Maschinenteile einer Werkzeugmaschine. Hierzu wird eine Maßverkörperung, beispielsweise in Form eines Maßstabs mit einer Inkrementalteilungsspur, mit dem einen und eine Abtasteinheit mit dem anderen der beiden Objekte verbunden, so dass durch Abtasten der Inkrementalteilungsspur positionsabhängige Abtastsignale gewonnen werden, mit deren Hilfe sich das Ausmaß der Bewegung der beiden Objekte zueinander entlang der Inkrementalteilungsspur bestimmen lässt.

Winkelmessgeräte, auch unter der Bezeichnung Drehgeber bekannt, sind nach dem gleichen Prinzip aufgebaut. An die Stelle des Maßstabs tritt hier aber als Maßverkörperung eine kreisförmige Scheibe, auf deren Umfang die Inkrementalteilungsspur aufgebracht ist. Die Scheibe ist drehfest mit einer zu messenden Welle verbunden, während die Abtasteinheit hierzu fest montiert ist.

Der Erzeugung der Positionssignale können dabei verschiedene physikalische Abtastprinzipien zugrunde liegen, beispielsweise optische, magnetische, induktive oder kapazitive.

Bei der Abtastung einer periodischen Inkrementalteilungsspur mittels der Abtasteinheit entstehen ausgangsseitig mindestens zwei zueinander phasenverschobene, periodische, analoge Positionssignale, die zur Bestimmung der Relativposition der Inkrementalteilungsspur und der Abtasteinheit ausgewertet werden. Die Inkrementalteilungsspur und die Abtasteinheit sind bevorzugt so ausgestaltet, dass die Positionssignale bei konstanter Verfahrgeschwindigkeit weitgehend sinusförmig sind. Die Auswertung erfolgt zum einen durch Zählen der Teilungsperioden der Inkrementalteilungsspur, zum anderen durch eine weitere Unterteilung der periodischen Positionssignale innerhalb einer Teilungsperiode.

Patentdokumente EP 0872714 A1 und DE 10 2004 045 849 A1 sind Beispiele für diese Art von Positionsmesseinrichtungen.

Besonders problematisch ist es, dass die Auswertung der Positionssignale fehlschlagen kann, wenn sich Eigenschaften eines oder mehrerer Positionssignale, beispielsweise durch Alterungseffekte, ändern. Das kann insbesondere dann passieren, wenn die Signalamplitude eines Positionssignals kleiner wird oder ein Offset auftritt. Häufig ist es für die Auswerteeinheit schwierig, oder sogar unmöglich, festzustellen, ob die Positionsmesseinrichtung defekt ist, oder tatsächlich keine Relativbewegung zwischen Abtasteinheit und Inkrementalteilungsspur vorliegt.

Es ist daher Aufgabe der Erfindung, eine Anordnung anzugeben, mit der Fehler von Positionssignalen in inkrementalen Positionsmesseinrichtungen erkannt werden.

Diese Aufgabe wird gelöst durch eine Überwachungseinheit nach Anspruch 1. Vorteilhafte Details der Überwachungseinheit ergeben sich aus den von Anspruch 1 abhängigen Ansprüchen.

Es wird nun eine Überwachungseinheit zur Überwachung von Positionssignalen inkrementaler Positionsmesseinrichtungen vorgeschlagen, an der eingangsseitig wenigstens zwei Positionssignale anliegen, die aus der Abtastung einer Inkrementalteilungsspur mittels einer Abtasteinheit resultieren und die zueinander phasenverschoben sind. Die Überwachungseinheit umfasst eine Signalverknüpfungseinheit, mit der aus unterschiedlichen Positionssignalen wenigstens zwei positionsabhängige Zustandsdatenworte generierbar sind und einer Auswerteeinheit, der die Zustandsdatenworte zugeführt sind, in der durch Vergleich der Zustandsdatenworte ungültige Zustände feststellbar und bei einem festgestellten ungültigen Zustand ein Fehlersignal generierbar ist.

Weiter ist es Aufgabe der Erfindung, ein Verfahren anzugeben, mit dem Fehler von Positionssignalen in inkrementalen Positionsmesseinrichtungen erkannt werden.

Diese Aufgabe wird gelöst durch ein Verfahren nach Anspruch 10. Vorteilhafte Details des Verfahrens ergeben sich aus den von Anspruch 10 abhängigen Ansprüchen.

Es wird ein Verfahren zur Überwachung von Positionssignalen inkrementaler Positionsmesseinrichtungen mittels einer Überwachungseinheit vorgeschlagen, der eingangsseitig wenigstens zwei Positionssignale zugeführt sind, die aus der Abtastung einer Inkrementalteilungsspur mittels einer Abtasteinheit resultieren und die zueinander phasenverschoben sind, wobei das Verfahren folgende Schritte aufweist:
- generieren von wenigstens zwei positionsabhängigen Zustandsdatenworten aus unterschiedlichen Positionssignalen in einer Signalverknüpfungseinheit,
- feststellen von ungültigen Zuständen der Zustandsdatenworte durch Vergleich in einer Auswerteeinheit und
- generieren eines Fehlersignals bei einem festgestellten ungültigen Zustand in der Auswerteeinheit.

Weitere Vorteile sowie Einzelheiten der vorliegenden Erfindung ergeben sich aus der nachfolgenden Beschreibung anhand der Figuren. Dabei zeigt
- Figur 1: ein Blockdiagramm eines ersten Ausführungsbeispiels einer Positionsmesseinrichtung mit einer erfindungsgemäßen Überwachungseinheit,
- Figur 2: ein Blockdiagramm eines zweiten Ausführungsbeispiels einer Positionsmesseinrichtung mit einer erfindungsgemäßen Überwachungseinheit und
- Figur 3: ein Blockdiagramm eines dritten Ausführungsbeispiels einer Positionsmesseinrichtung mit einer erfindungsgemäßen Überwachungseinheit

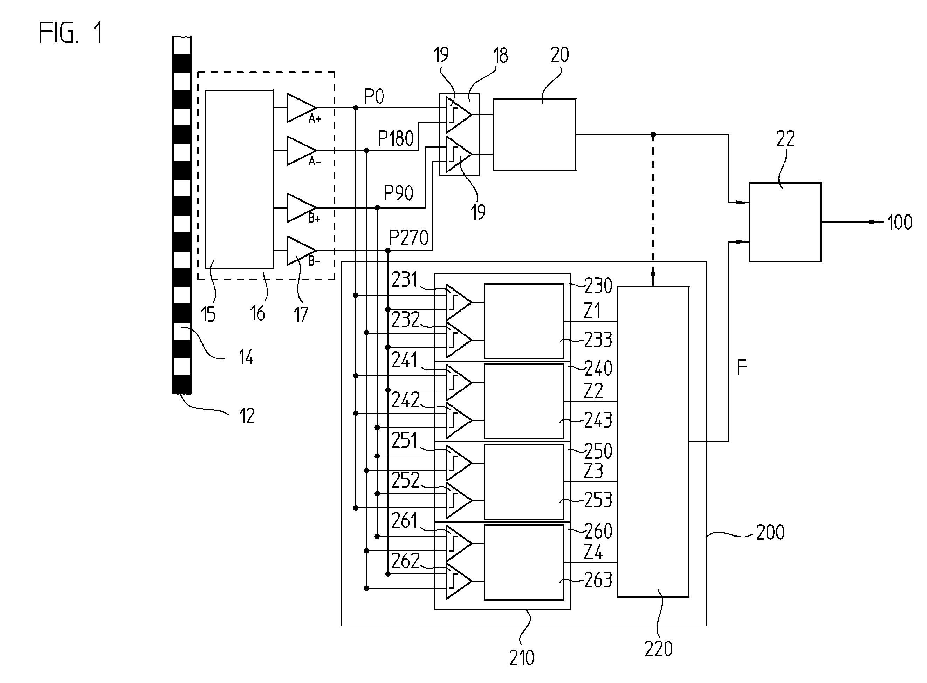

Figur 1 zeigt ein Blockdiagramm einer Positionsmesseinrichtung 10 mit einer erfindungsgemäßen Überwachungseinheit 200. Auf einem Teilungsträger 12 befindet sich eine Inkrementalteilungsspur 14, die von einer Abtasteinheit 16 abgetastet wird. Je nachdem, ob es sich bei der Positionsmesseinrichtung 10 um ein Gerät zum Messen von linearen oder rotatorischen Bewegungen handelt, ist der Teilungsträger 12 als Maßstab, oder als kreisförmige Scheibe ausgebildet. Im ersten Fall ist der Maßstab beispielsweise an einem ersten Maschinenteil angebracht und die Abtasteinheit 16 an einem zweiten Maschinenteil. Im zweiten Fall ist die kreisförmige Scheibe üblicherweise drehfest mit einer Welle verbunden und die Abtasteinheit 16 ist statisch hierzu angeordnet. Bei einer Relativbewegung des ersten Maschinenteils zum zweiten Maschinenteil in Richtung der Inkrementalteilungsspur 14, bzw. bei Drehung der Welle entstehen in der Abtasteinheit 16 Positionssignale, deren Auswertung eine Aussage über relative Positionsänderungen erlaubt. Üblicherweise sind auch Mittel vorgesehen, um eine Referenzposition (z.B. durch überfahren einer Referenzmarke) zu bestimmen. Nach der Bestimmung der Referenzposition ist eine Bestimmung der Absolutposition der Abtasteinheit 16 gegenüber der Inkrementalteilungsspur 14 bezogen auf die Referenzposition möglich.

Erfolgt die Relativbewegung zwischen der Inkrementalteilungsspur 14 und der Abtasteinheit 16 mit konstanter Geschwindigkeit, so sind die Positionssignale bevorzugt weitgehend sinusförmig und weisen eine Periodendauer auf, die der Teilungsperiode der Inkrementalteilungsspur 14 entspricht. Es sind Positionsmesseinrichtungen bekannt, deren Abtasteinheiten zwei um 90° zueinander phasenverschobene Positionssignale erzeugen. Ebenso gibt es Positionsmesseinrichtungen, die drei um 120° phasenverschobene Positionssignale verarbeiten. Es hat sich jedoch als besonders vorteilhaft erwiesen, in der Abtasteinheit vier um je 90° zueinander phasenverschobene Positionssignale zu erzeugen, insbesondere weil durch differentielle Verarbeitung der zwei um 180° phasenverschobenen Signalpaare hohe Signalamplituden und störunempfindliche Signale erreicht werden. Ein derartiges System ist in Figur 1 dargestellt. Die Abtasteinheit 16 umfasst in diesem Ausführungsbeispiel eine Detektoreinheit 15 zur Abtastung der Inkrementalteilungsspur 14. Dabei erzeugt die Detektoreinheit 15 vier um je 90° phasenverschobene Abtastsignale. Diese werden mittels Verstärkereinheiten 17 verstärkt und anschließend als Positionssignale P0, P90, P180 und P270 ausgegeben. Entsprechend ihrer Phasenlage werden die Positionssignale P0, P90, P180 und P270 als 0°-Positionssignal P0, 90°-Positionssignal P90, 180°-Positionssignal P180 und 270°-Positionssignal P270 bezeichnet.

Das physikalische Prinzip, das der Abtastung zugrunde liegt, ist für die vorliegende Erfindung nicht relevant. So kann es sich beispielsweise um eine optische, magnetische, induktive oder auch kapazitive Abtastung handeln.

Die Positionssignale P0, P90, P180, P270 sind einer Signalverarbeitungseinheit 18 zugeführt, die aus den Positionssignalen P0, P90, P180, P270 Zählsignale generiert, mit denen die durch die Relativbewegung des Teilungsträgers, bzw. der Inkrementalteilungsspur 14 zur Abtasteinheit 16 verursachten Änderungen der Positionssignale vorzeichen- d.h. bewegungsrichtungsabhängig gezählt werden können. Die Signalverarbeitungseinheit 18 umfasst in diesem Ausführungsbeispiel lediglich zwei Komparatoren 19, denen je zwei um 180° phasenverschobene Positionssignale P0, P180, bzw. P90, P270 zugeführt sind. Als Zählsignale für die Hauptzählereinheit 20 entstehen so an den Ausgängen der Komparatoren 19 zwei um 90° phasenverschobene Rechtecksignale, die eine bewegungsrichtungsabhängige Zählung der Signalperioden der Positionssignale P0, P90, P180, P270 erlauben.

Es sei an dieser Stelle darauf hingewiesen, dass die Signalverarbeitungseinheit 18 in der Praxis wesentlich komplexer aufgebaut sein kann. Insbesondere kann sie Korrektureinheiten zur Korrektur von Offset-, Amplituden- und Phasenfehlern der Positionssignale P0, P90, P180, P270 umfassen.

Die Zählsignale werden an die Hauptzählereinheit 20 weitergeleitet. Am Ausgang der Hauptzählereinheit 20 entsteht auf diese Weise ein absoluter Positionswert, dessen Grundauflösung üblicherweise eine Teilungsperiode der Inkrementalteilungsspur 14 beträgt.

Die zwei um 90° phasenverschobenen Zählsignale durchlaufen während einer Teilungsperiode vier Zustandskombinationen, die den vier Quadranten (0°-90°; 90°-180°; 180°-270°; 270°-360°) einer Sinusschwingung zugeordnet und somit auch als Quadrantenzählwerte betrachtet werden können. Diese kann die Hauptzählereinheit 20 als niederwertigste Bits (LSB) mit ausgeben und so auf einfache Weise die Auflösung auf eine viertel Signalperiode erhöhen.

Der Ausgang der Hauptzählereinheit 20 ist nun einer Schnittstelleneinheit 22 zugeführt, die, beispielsweise mittels einer seriellen Schnittstellenverbindung, mit einer Folgeelektronik 100 verbunden ist. Über diese serielle Schnittstelle kann nun die Folgeelektronik 100 von der Positionsmesseinrichtung 10 Positionswerte (den Zählerstand der Hauptzählereinheit 20), sowie ggf. weitere Daten anfordern.

Neben der Bildung des Zählerwertes, der mit einer Auflösung von ganzen Signalperioden, bzw. viertel Signalperioden einen relativ groben Positionswert darstellt, können in der Positionsmesseinrichtung 10 noch Mittel (nicht dargestellt) vorgesehen sein, einen hochauflösenden Feinpositionswert durch Interpolation der Positionssignale P0, P90, P180, P270 zu schaffen und ebenfalls der Schnittstelleneinheit 22 zuzuführen.

Wie bereits erwähnt, sind in Positionsmesseinrichtungen 10, die auf der Auswertung einer Inkrementalteilungsspur basieren, Mittel vorgesehen, um einen Bezugspunkt für die Zählung zu schaffen. Das kann in einem einfachen Fall dadurch erfolgen, dass auf dem Teilungsträger 12 zusätzlich zur Inkrementalteilungsspur 14 eine sog. Referenzmarke vorgesehen ist, die ebenfalls von der Abtasteinheit 16 erfasst werden kann. Nach dem Erfassen der Referenzmarke kann die Hauptzählereinheit 20 zurückgesetzt, bzw. auf einen definierten Startwert gesetzt werden. Derartige Mittel sind dem Fachmann hinlänglich bekannt und werden hier nicht weiter ausgeführt.

Erfindungsgemäß sind die Positionssignale in der Positionsmesseinrichtung 10 weiter einer Überwachungseinheit 200 zugeführt, die die Korrektheit der Positionssignale aufgrund von Zustandskombinationen und deren positionsabhängiger Abfolge überwacht. Hierzu ein einfaches Beispiel anhand von zwei weitgehend sinusförmigen Positionssignalen, die um 90° zueinander phasenverschoben sind und positionsabhängig um einen Bezugswert schwingen, der bei 50% des Spitze-Spitze-Wertes der Positionssignale liegt. Ordnet man Werten oberhalb des Bezugswertes einen logischen Highpegel und Werten unterhalb des Bezugswertes einen logischen Lowpegel zu, so ergeben sich für die zwei Positionswerte vier logische Zustandskombinationen, die während einer Relativbewegung der Abtasteinheit gegenüber dem Teilungsträger zwingend aufeinander folgen müssen. Wird dagegen eine der Zustandskombinationen übersprungen, kann von einer Fehlfunktion der Abtastung ausgegangen werden.

Die Positionssignale P0, P90, P180, P270 sind in der Überwachungseinrichtung 200 einer Signalverknüpfungseinheit 210 zugeführt, die aus den Positionssignalen P0, P90, P180, P270, bzw. Positionssignalgruppen Zustandsdatenworte bildet. Die vorliegende Erfindung basiert auf der Erkenntnis, dass diese Zustandsdatenworte ihren Zustand, d.h. ihren digitalen Wert, während einer Relativbewegung zwischen Abtasteinheit 16 und Inkrementalteilungsspur 14 vorhersagbar ändern. Tritt nun beim Vergleich dieser Zustandsdatenworte in einer Auswerteeinheit 220 eine Diskrepanz zwischen tatsächlichem Zustand und erwartetem Zustand auf, so kann, wenn zur Bildung der Zustandsdatenworte verschiedene Positionssignale P0, P90, P180, P270, bzw. Positionssignalgruppen herangezogen werden, eine Fehlfunktion eines Positionssignals P0, P90, P180, P270 erkannt werden.

Werden also beispielsweise aus den vier Positionssignalen P0, P90, P180, P270 jeweils einzeln Zustandsdatenworte gebildet (wie oben bereits beschrieben durch Signalvergleich mit einem Bezugswert, der zwischen Maximal- und Minimalwert des Positionssignals liegt), so kann durch Kreuzvergleich der Zustandsdatenworte ein fehlerhaftes Positionssignal ermittelt werden. Ebenso ist es möglich, aus Paaren von Positionssignalen P0, P90, P180, P270 Zustandsdatenworte zu bilden, beispielsweise ein erstes Zustandsdatenwort durch Vergleich des 0°-Positionssignals P0 und des 90°-Positionssignals P90, sowie ein zweites Zustandsdatenwort durch Vergleich des 180°-Positionssignals P180 und des 270°-Positionssignals P270.

In einer besonders vorteilhaften Ausführungsform, die in Figur 1 dargestellt ist, werden zur Bildung von vier Zustandsdatenworten Z1, Z2, Z3, Z4 jeweils drei der vier Positionssignale P0, P90, P180, P270 herangezogen, die Zustandszähleinheiten 230, 240, 250, 260 zugeführt sind. Dadurch, dass die Positionssignale P0, P90, P180, P270 periodisch sind, weisen drei ausgewählte Positionssignale immer ein zentrales, ein hierzu um 90° nacheilendes und ein um 90° voreilendes Positionssignal auf.

Einer ersten Zustandszähleinheit 230 sind das 0°-, das 180°- und das 270°-Positionssignal P0, P180, P270 zugeführt. Das 270°-Positionssignal P270 ist in diesem Fall das zentrale Positionssignal, das 180°-Positionssignal P180 das nacheilende, das 0°-Positionssignal P0 das voreilende. Ein erster Komparator 231 vergleicht das 0°-Positionssignal P0 mit dem 270°-Positionssignal P270, ein zweiter Komparator 232 das 180°-Positionssignal P180 mit dem 270°-Positionssignal P270. An den Ausgängen der Komparatoren 231, 232 entstehen so, vergleichbar mit den Ausgängen der Komparatoren 19 der Signalverarbeitungseinheit 18, zwei um 90° zueinander phasenverschobene Zählsignale, die einem Zähler 233 zur vorzeichen- bzw. bewegungsrichtungsabhängigen Zählung der Signalperioden der verwendeten Positionssignale P0, P180, P270 zugeführt sind.

Analog zur ersten Zustandszähleinheit 230 vergleicht in der zweiten Zustandszähleinheit 240 ein erster Komparator 241 das (zentrale) 0°-Positionssignal P0 mit dem (nacheilenden) 270°-Positionssignal P270, ein zweiter Komparator 232 das (zentrale) 0°-Positionssignal P0 mit dem (voreilenden) 90°-Positionssignal P270 und ein Zähler 243 zählt die Signalperioden.

In der dritten Zustandszähleinheit 250 vergleicht ein erster Komparator 251 das (zentrale) 90°-Positionssignal P90 mit dem (voreilenden) 180°-Positionssignal P180, ein zweiter Komparator 252 das (zentrale) 90°-Positionssignal P90 mit dem (nacheilenden) 0°-Positionssignal P0 und ein Zähler 253 zählt die Signalperioden.

In der vierten Zustandszähleinheit 260 schließlich vergleicht ein erster Komparator 261 das (nacheilende) 90°-Positionssignal P90 mit dem (zentralen) 180°-Positionssignal P180, ein zweiter Komparator 252 das (voreilende) 270°-Positionssignal P270 mit dem (zentralen) 180°-Positionssignal P180 und ein Zähler 263 ist zum Zählen der Signalperioden vorgesehen.

Zusammenfassend bleibt in jeder Zustandszähleinheit 230, 240, 250, 260 genau eines der Positionssignale P0, P90, P180, P270 unberücksichtigt. Der Ausfall eines Positionssignals bewirkt also, dass drei Zähler von den Erwartungswerten abweichen (z.B. stehenbleiben), während der Zähler, der dieses eine Positionssignal nicht berücksichtigt, weiter die erwarteten Werte liefert.

Die Einführung der Zähler 233, 243, 253, 263 hat den besonderen Vorteil, dass nicht nur aktuelle Zustandsänderungen, also Positionsänderungen innerhalb einer Teilungsperiode, sondern auch der positionsabhängige Verlauf der Zustandsänderungen erfasst wird. Insbesondere bei sehr schnellen Zustandsänderungen, als Folge einer hohen Verfahrgeschwindigkeit der Abtasteinheit 16 gegenüber der Inkrementalteilungsspur 14, kann nun zur Feststellung eines ungültigen Zustands in der Auswerteeinheit 220 ein Toleranzbereich festgelegt werden, innerhalb dessen die Zählerwerte der Zustandszähleinheiten 230, 240, 250, 260 voneinander abweichen dürfen.

Jede Zustandszähleinheit 230, 240, 250, 260 in Figur 1 umfasst zwei Komparatoren 231, 232, 241, 242, 251, 252, 261, 262. Da jedoch die Komparatoren 231 und 241, 232 und 262, 242 und 252, 251 und 261 jeweils gleiche Positionssignale verarbeiten, kann die Anzahl der Komparatoren in der Signalverknüpfungseinheit 210 halbiert werden, wenn die Ausgänge der verbleibenden Komparatoren jeweils zwei Zählern zugeführt werden. So kann beispielsweise Komparator 241 eingespart werden, wenn der Ausgang des Komparators 231 nicht nur dem ersten Zähler 233 in der ersten Zustandszähleinheit 230, sondern auch noch dem zweiten Zähler 243 in der zweiten Zustandszähleinheit 240 zugeführt wird. Der Komparator 231 kann in diesem Fall sowohl der ersten Zustandszähleinheit 230, als auch der zweiten Zustandszähleinheit 240 zugeordnet werden.

Die Ausgänge der Zähler 233, 243, 253, 263 bilden die Zustandsdatenworte Z1, Z2, Z3, Z4. Die Bitanzahl der Zustandsdatenworte Z1, Z2, Z3, Z4 kann dabei der Bitanzahl der Hauptzählereinheit 20 entsprechen und somit den gesamten Messbereich des Positionsmessgeräts umfassen. Das hat den besonderen Vorteil, dass in diesem Fall neben dem Zählerwert der Hauptzählereinheit 20 redundante Zählerwerte zur Verfügung stehen und ggf. über die Schnittstelleneinheit 22 mit ausgegeben werden können. In der Praxis ist es aber meist ausreichend, lediglich einige, z.B. drei Bits vorzusehen und den Zähler als sog. umlaufenden Zähler auszubilden, der nach Erreichen des höchsten Zählerstands wieder bei Null beginnt, bzw. beim Unterschreiten des niedrigsten Zählerstands zum Maximalwert springt. Das kleinstmögliche Zustandsdatenwort Z1, Z2, Z3, Z4 umfasst lediglich 1 Bit. Der Zählerwert kann um die digitalen Ausgangssignale der Komparatoren 231, 232 ergänzt werden, da diese, wie oben bereits beschrieben, Quadrantenzählwerte sind. In einer vereinfachten Ausführung kann auf die Zähler 233, 243, 253, 263 verzichtet werden und lediglich die Quadrantenzählwerte als Zustandsdatenworte Z1, Z2, Z3, Z4 zur Auswerteeinheit 220 weitergeleitet werden.

Die Auswerteeinheit 220 vergleicht die Zustandsdatenworte Z1, Z2, Z3, Z4 und generiert, wenn ein ungültiger Zustand auftritt, ein Fehlersignal F. Dieses kann beispielsweise der Schnittstelleneinheit 22 zugeführt sein und von dieser an die Folgeelektronik 100 weitergeleitet werden. Ein ungültiger Zustand kann zum einen durch Vergleich der Zustandsdatenworte Z1, Z2, Z3, Z4 miteinander (auseinanderlaufen der Zählerwerte über die erlaubte Toleranz hinaus), zum anderen durch Überprüfung von Wertänderungen der Zustandsdatenworte Z1, Z2, Z3, Z4 auf Plausibilität (Zählerwerte dürfen sich jeweils nur um einen Zählschritt ändern) erkannt werden.

Die vorliegende Erfindung kann weiter verbessert werden, wenn der Zählerwert der Hauptzählereinheit 20, der ja den eigentlichen Positionsmesswert bildet, ganz oder teilweise (z.B. eine Anzahl der niederwertigeren Bits) der Auswerteeinheit 220 zugeführt ist und dieser ebenfalls mit den Zustandsdatenworten Z1, Z2, Z3, Z4 verglichen wird. Auf diese Weise werden nicht nur die Positionssignale P0, P90, P180, P270 überwacht, sondern durch den Kreuzvergleich mit dem Zählerwert der Hauptzählereinheit 20 auch noch der Signalpfad der Positionssignale P0, P90, P180, P270 über die Signalverarbeitungseinheit 18 und die Hauptzählereinheit 20.

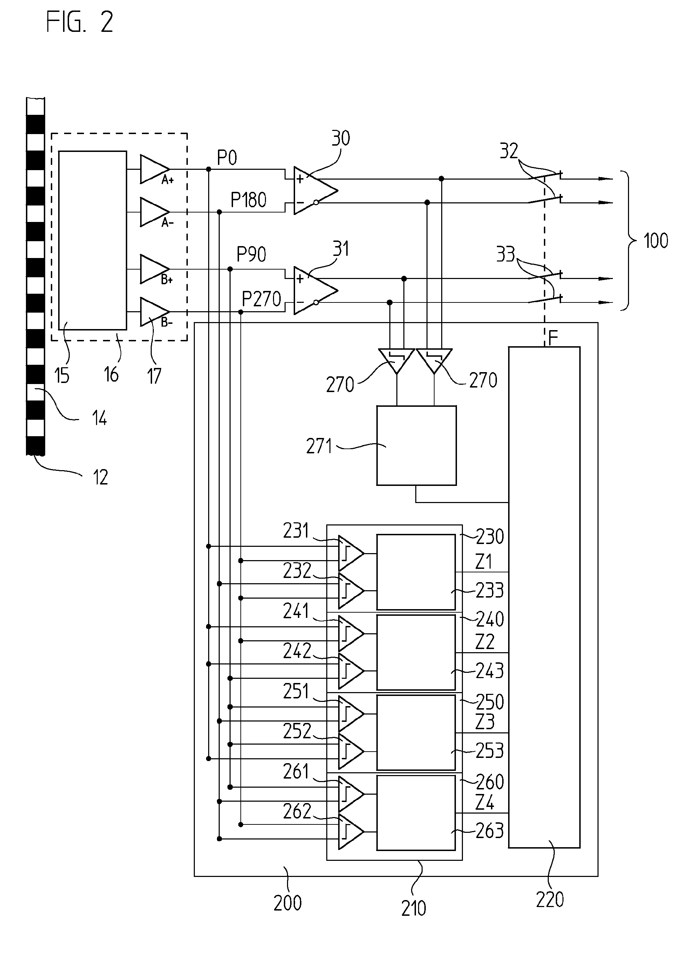

Figur 2 zeigt ein Blockdiagramm eines zweiten Ausführungsbeispiels einer Positionsmesseinrichtung mit einer erfindungsgemäßen Überwachungseinheit 200. Anders als beim vorherigen Ausführungsbeispiel erzeugt diese Positionsmesseinrichtung keinen digitalen Positionswert in Form eines Zählerwertes als Ausgangssignal, sondern gibt die analogen Positionssignale P0, P90, P180, P270, mittels Differenzverstärker 30, 31 verstärkt, zur weiteren Verarbeitung an die Folgeelektronik 100 aus.

Um dennoch einen Kreuzvergleich zwischen dem Signalpfad zur Erzeugung der Zustandsdatenworte Z1, Z2, Z3, Z4 und den Ausgangssignalen der Differenzverstärker 30, 31 zu ermöglichen, umfasst die Überwachungseinheit 200, analog zu den Komparatoren 19 und der Hauptzählereinheit 20 aus dem Ausführungsbeispiel von Figur 1, zusätzlich zwei Komparatoren 270 und eine Hilfszählereinheit 271 für die Erzeugung eines digitalen Zählerwertes. Da hier keine Notwendigkeit besteht, den gesamten Messbereich der Positionsmesseinrichtung zu erfassen, kann die Hilfszählereinheit 271 auf wenige Bits beschränkt werden. Auch hier ist es möglich, die Ausgangssignale der Komparatoren 270 als Quadrantenzählwerte für den Vergleich mit den Zustandsdatenworten Z1, Z2, Z3, Z4 in der Auswerteeinheit 220 heranzuziehen.

Die Differenzverstärker 30, 31 stellen wiederum lediglich eine stark vereinfachte Variante der Signalverarbeitung dar. In der Praxis kann an die Stelle der Differenzverstärker 30, 31 eine wesentlich komplexere Schaltung treten, die neben der reinen Verstärkungsfunktion noch eine weitere Verarbeitung der Positionssignale P0, P90, P180, P270 vornimmt, beispielsweise die Korrektur von Offset- und/oder Phasenfehlern oder eine synthetische Frequenzvervielfachung der Ausgangssignale gegenüber den Positionssignalen P0, P90, P180, P270.

Alternativ können die Differenzverstärker 30, 31 statt analoger Ausgangssignale auch Quadrantenzählwerte bilden und direkt als sogenannte Quadratursignale zur weiteren Auswertung an die Folgeelektronik 100 ausgeben.

Da in diesem Ausführungsbeispiel keine Schnittstelleneinheit zur Übertragung digitaler Informationen vorgesehen ist, kann das Fehlersignal F über eine separate Leitung zur Folgeelektronik 100 ausgegeben werden. Ist eine separate Leitung nicht erwünscht, kann die Signalisierung eines Fehlers auch indirekt über die Ausgangssignalleitungen erfolgen. So sind im Ausführungsbeispiel von Figur 2 die Ausgangssignale der Differenzverstärker 30, 31 über Schaltelemente 32, 33 geführt. Das Auftreten des Fehlersignals F führt nun zum Öffnen der Schaltelemente 32, 33 und signalisiert so der Folgeelektronik 100 den Fehlerfall. Alternativ könnte zur Signalisierung des Fehlerfalls auch ein Kurzschluss zwischen den Ausgangssignalen der Differenzverstärker 30, 31 herbeigeführt werden.

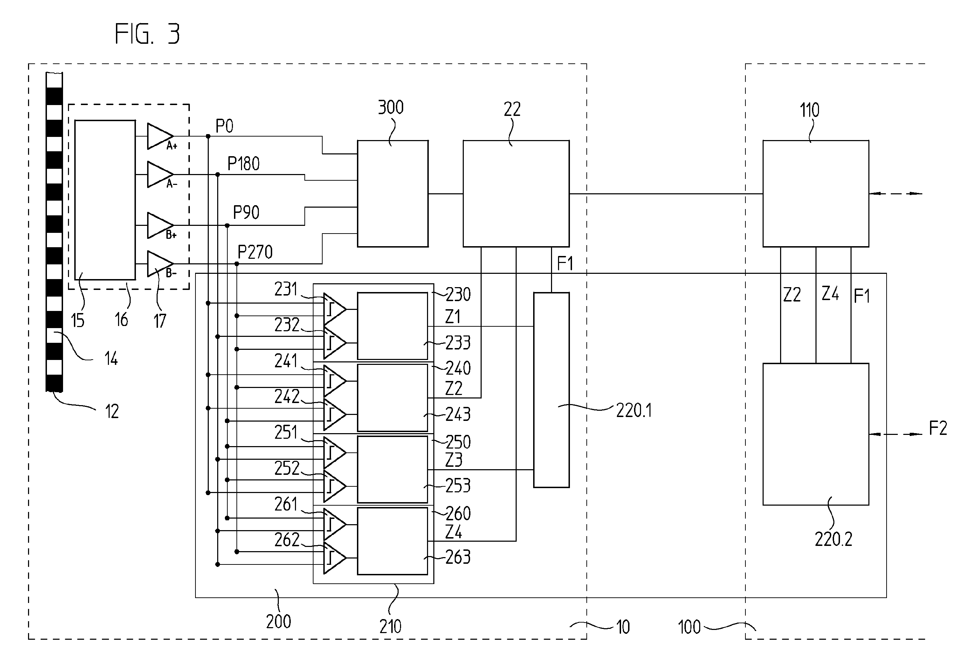

Ein Blockdiagramm eines dritten Ausführungsbeispiels einer erfindungsgemäßen Überwachungseinheit 200 ist in Figur 3 dargestellt. Komponenten, die in Verbindung mit den vorangegangenen Ausführungsbeispielen bereits beschrieben wurden, tragen das gleiche Bezugszeichen wie in den Figuren 1 und 2.

Wesentlicher Unterschied im Vergleich zu den vorhergehenden Ausführungsbeispielen ist hier, dass die Auswerteeinheit 220 in diesem Beispiel in eine erste Auswerteeinheit 220.1 und eine zweite Auswerteeinheit 220.2 aufgeteilt ist, wobei sich die erste Auswerteeinheit 220.1 im Positionsmessgerät 10 und die zweite Auswerteeinheit 220.2 in der Folgeelektronik 100 befindet. Folglich erstreckt sich die Überwachungseinheit 200 in diesem Ausführungsbeispiel auf die Positionsmesseinrichtung 10 und auf die Folgeelektronik 100.

Der ersten Auswerteeinheit 220.1 sind nun das erste Zustandsdatenwort Z1 und das dritte Zustandsdatenwort Z3 zugeführt. Wie oben bereits gezeigt, werden zur Erzeugung des ersten Zustandsdatenwortes Z1 das 0°-Positionssignal P0, das 180°-Positionssignal P180 und das 270°-Positionssignal P270 herangezogen, nicht aber das 90°-Positionssignal. Zur Erzeugung des dritten Zustandsdatenworts Z3 dagegen bleibt das 270°-Positionssignal P270 ungenutzt, verwendet wird statt dessen das 90°-Positionssignal P90. Weichen die beiden Zustandsdatenwörter Z1 und Z3 voneinander ab, so kann auf einen Ausfall eines der beiden Positionssignale P90 oder P270 geschlossen werden. In diesem Fall gibt die erste Auswerteinheit 220.1 ein erstes Fehlersignal F1 an die Schnittstelleneinheit 22 aus.

Das zweite Zustandsdatenwort Z2 und das vierte Zustandsdatenwort Z4 werden in der zweiten Auswerteeinheit 220.2 ausgewertet. Sie sind hierzu der Schnittstelleneinheit 22 zugeführt und von dieser zu einer Schnittstelleneinheit 110 in der Folgeelektronik 100 übertragbar, die sie zur Auswertung an die zweite Auswerteeinheit 220.2 weiterleitet. Dadurch, dass zur Erzeugung des zweiten Zustandsdatenworts Z2 das 180°-Positionssignal und zur Erzeugung des vierten Zustandsdatenworts Z4 das 0°-Positionssignal P0 nicht verwendet werden, kann wiederum durch eine Abweichung der beiden Zustandsdatenwörter Z2, Z4 auf einen Fehler eines der beiden Positionssignale P0, 180 geschlossen werden, der durch ein zweites Fehlersignal F2 signalisiert wird.

Das erste Fehlersignal F1 ist, analog zum Fehlersignal F im ersten Ausführungsbeispiel, ebenfalls der Schnittstelleneinheit 22 zugeführt und zur Folgeelektronik 100 übertragbar. Dort kann es entweder separat ausgewertet, oder, wie in Figur 3 angedeutet, der zweiten Auswerteeinheit 220.2 zugeführt werden, die es zur Bildung des zweiten Fehlersignals F2 mit einbezieht, so dass das zweite Fehlersignal F2 ein Summenfehlersignal bildet, das allgemein einen Ausfall oder Fehler eines der Positionssignale P0, P90, P180, P270 signalisiert.

Die in Figur 3 dargestellte Aufteilung der Auswerteeinheit 220 in eine erste Auswerteeinheit 220.1 in der Positionsmesseinrichtung 10 und eine zweite Auswerteeinheit 220.2 in der Folgeelektronik 100 ist insbesondere dann sehr vorteilhaft, wenn zur Erzeugung der Zustandsdatenworte Z2, Z4, die zur Folgeelektronik 100 übertragen werden, Zustandszähleinheiten 240, 260 zum Einsatz kommen, deren Zählbereich den Messbereich des Positionsmessgeräts 10, also der zu zählenden Teilungsstriche auf dem Teilungsträger, ggf. erweitert um die Quadrantenzählwerte, umfasst. In diesem Fall kann auf eine Hauptzählereinheit 20 verzichtet werden, da die Zustandsdatenworte Z2, Z4 bereits vollständige Positionswerte darstellen. Durch die redundante Übertragung der zwei Zustandsdatenworte Z2, Z4 und ihre Auswertung in der Folgeelektronik 100 können darüber hinaus Fehler in der Datenübertragung über die Datenübertragungsstrecke, die durch die Schnittstelleneinheit 22 im Positionsmessgerät 10, die Schnittstelleneinheit 110 in der Folgeelektronik 100, sowie die dazwischen angeordnete Datenübertragungsleitung gebildet ist, aufgedeckt werden.

Dagegen ist es ausreichend, wenn zur Erzeugung der Zustandsdatenworte Z1 und Z3, die in der Positionsmesseinrichtung 10 ausgewertet werden, Zustandszähleinheiten 230, 250 mit einem kleinen Zählbereich, beispielsweise 8 Bit oder weniger, vorgesehen werden.

Die Positionsmesseinrichtung 10 in Figur 3 umfasst weiterhin einen Interpolator 300, der aus den Amplitudenwerten der Positionssignale P0, P90, P180, P270 einen Feinpositionswert erzeugt, der die Position zwischen zwei Teilungsstrichen auf dem Teilungsträger 12 angibt. Dies kann, wie dem Fachmann bekannt, durch Analog-/Digitalwandlung und anschließende Anwendung mathematischer Algorithmen (z.B. CORDIC) erfolgen. Durch Ergänzung der Positionswerte (der Zustandsdatenworte Z2, Z4) um den Feinpositionswert kann die Auflösung der Positionsmesseinrichtung 10 wesentlich erhöht werden. Zur Verbesserung der Fehleraufdeckungswahrscheinlichkeit ist es vorteilhaft, die Zustandsdatenworte Z2, Z4 bereits in der Positionsmesseinrichtung 10 um den Feinpositionswert zu ergänzen und in die Auswertung in der zweiten Auswerteeinheit 220.2 mit einzubeziehen.

Selbstverständlich zeigen die Ausführungsbeispiele lediglich Varianten von Überwachungseinheiten. Die erfindungsgemäßen Maßnahmen können auch in anderen Positionsmesseinrichtungen geeignet abgewandelt eingesetzt werden. Erfindungsgemäße Überwachungseinheiten sind besonders gut dazu geeignet, in hochintegrierte anwendungsspezifische Bausteine (ASICs) integriert zu werden. Mit Vorteil sind Abtasteinheit, Positionsauswertung, Schnittstelleneinheit, sowie die erfindungsgemäße Überwachungseinheit in einem einzigen ASIC integriert.

Ist ein Teil der Auswerteeinheit 220, wie im dritten Ausführungsbeispiel anhand der zweiten Auswerteeinheit 220.2 gezeigt, in der Folgeelektronik 100 angeordnet, so kann dieser Teil beispielsweise als ASIC oder FPGA (Field Programmable Gate Array) ausgeführt sein. Da es sich bei der Folgeelektronik 100 in der Regel um einen Computer handelt, kann die zweite Auswerteeinheit 220.2 aber auch als Computerprogramm realisiert werden.

## Patentansprüche

1. Überwachungseinheit (200) zur Überwachung von Positionssignalen (P0, P90, P180, P270) inkrementaler Positionsmesseinrichtungen, wobei eingangsseitig wenigstens zwei Positionssignale (P0, P90, P180, P270) anliegen, die aus der Abtastung einer Inkrementalteilungsspur (14) mittels einer Abtasteinheit (16) resultieren und die zueinander phasenverschoben sind, mit
• einer Signalverknüpfungseinheit (210), mit der aus unterschiedlichen Positionssignalgruppen (P0, P90, P180, P270) wenigstens zwei positionsabhängige Zustandsdatenworte (Z1, Z2, Z3, Z4) generierbar sind und
• einer Auswerteeinheit (220), der die Zustandsdatenworte (Z1, Z2, Z3, Z4) zugeführt sind, in der durch Vergleich der Zustandsdatenworte (Z1, Z2, Z3, Z4) ungültige Zustände feststellbar und bei einem festgestellten ungültigen Zustand ein Fehlersignal (F, F1, F2) generierbar ist.

2. Überwachungseinheit (200) nach Anspruch 1, wobei in der Signalverknüpfungseinheit (210) wenigstens zwei Zustandszähleinheiten (230, 240, 250, 260) vorgesehen sind, mit denen Zustandswechsel der Positionssignale (P0, P90, P180, P270) zählbar und die Zählerwerte als Zustandsdatenworte (Z1, Z2, Z3, Z4) der Auswerteeinheit (220) zugeführt sind.

3. Überwachungseinheit (200) nach einem der vorhergehenden Ansprüche, wobei
• die Positionssignale (P0, P90, P180, P270) ein 0°-Positionssignal (P0), ein 90°-Positionssignal (P90), ein 180°-Positionssignal (P180) und ein 270°-Positionssignal (P270) umfassen, die je eine Phasenverschiebung von 90° zueinander aufweisen und jeder Zustandszähleinheit (230, 240, 250, 260) drei Positionssignale (P0, P90, P180, P270) zugeführt sind,
• jede Zustandszähleinheit (230, 240, 250, 260) zwei Komparatoren (231, 232, 241, 242, 251, 252, 261, 262) umfasst, mit denen aus jeweils zwei der drei Positionssignale (P0, P90, P180, P270), die um 90° zueinander phasenverschoben sind, ebenfalls um 90° zueinander phasenverschobene Quadrantenzählwerte generierbar sind.

4. Überwachungseinheit (200) nach einem der vorhergehenden Ansprüche, wobei die Quadrantenzählwerte als Zustandsdatenworte (Z1, Z2, Z3, Z4) der Auswerteeinheit (220) zugeführt sind.

5. Überwachungseinheit (200) nach einem der Ansprüche 3 oder 4, wobei jede Zustandszähleinheit (230, 240, 250, 260) einen Zähler (233, 243, 253, 263) umfasst, dem die Quadrantenzählwerte zugeführt sind und der zum Zählen von Signalperioden der Positionssignale (P0, P90, P180, P270) geeignet ist und die Zählerwerte der Zähler (233, 243, 253, 263) als Zustandsdatenworte (Z1, Z2, Z3, Z4) der Auswerteeinheit (220) zugeführt sind.

6. Überwachungseinheit (200) nach einem der vorhergehenden Ansprüche, wobei der Überwachungseinheit (200) Ausgangssignale der Positionsmesseinrichtung zugeführt sind und diese in der Auswerteeinheit (220) beim Vergleich mit berücksichtigt sind.

7. Überwachungseinheit (200) nach einem der Ansprüche 1 bis 5, wobei
• in der Signalverknüpfungseinheit (210) vier Zustandsdatenworte (Z1, Z2, Z3, Z4) generierbar sind,
• die Auswerteeinheit (220) eine erste Auswerteeinheit (220.1) und eine zweite Auswerteeinheit (220.2) umfasst und die erste Auswerteeinheit (220.1) in der Positionsmesseinrichtung (10) und die zweite Auswerteeinheit (220.2) in der Folgeelektronik (100) angeordnet ist,
• der ersten Auswerteeinheit (220.1) und der zweiten Auswerteeinheit (220.2) jeweils zwei der vier Zustandsdatenworte (Z1, Z2, Z3, Z4) zugeführt sind und
• in der ersten Auswerteeinheit (220.1) ein bei einem festgestellten ungültigen Zustand ein erstes Fehlersignal (F1) und in der zweiten Auswerteeinheit (220.2) bei einem festgestellten ungültigen Zustand ein zweites Fehlersignal (F2) generierbar ist.

8. Überwachungseinheit (200) nach Anspruch 7, wobei die zwei Zustandsdatenworte (Z2, Z4), die in der zweiten Auswerteeinheit (220.2) verglichen werden, dieser über eine Schnittstelleneinheit (22) der Positionsmesseinrichtung (10) und eine Schnittstelleneinheit (110) der Folgeelektronik (100) zuführbar sind.

9. Überwachungseinheit (200) nach einem der Ansprüche 7 bis 8, wobei die Zustandsdatenworte (Z2, Z4) die der zweiten Auswerteeinheit (220.2) zugeführt sind, Zählerwerte sind, deren Zählbereich den Messbereich des Positionsmessgeräts (10) umfasst.

10. Verfahren zur Überwachung von Positionssignalen (P0, P90, P180, P270) inkrementaler Positionsmesseinrichtungen mittels einer Überwachungseinheit (200), der eingangsseitig wenigstens zwei Positionssignalgruppen (P0, P90, P180, P270) zugeführt sind, die aus der Abtastung einer Inkrementalteilungsspur (14) mittels einer Abtasteinheit (16) resultieren und die zueinander phasenverschoben sind, mit folgenden Schritten:
• generieren von wenigstens zwei positionsabhängigen Zustandsdatenworten (Z1, Z2, Z3, Z4) aus unterschiedlichen Positionssignalen (P0, P90, P180, P270) in einer Signalverknüpfungseinheit (210),
• feststellen von ungültigen Zuständen der Zustandsdatenworte (Z1, Z2, Z3, Z4) durch Vergleich in einer Auswerteeinheit (220) und
• generieren eines Fehlersignals (F, F1, F2) bei einem festgestellten ungültigen Zustand in der Auswerteeinheit (220).

11. Verfahren nach Anspruch 10, wobei in der Signalverknüpfungseinheit (210) wenigstens zwei Zustandszähleinheiten (230, 240, 250, 260) vorgesehen sind, die Zustandswechsel der Positionssignale (P0, P90, P180, P270) zählen und die Zählerwerte als Zustandsdatenworte (Z1, Z2, Z3, Z4) an die Auswerteeinheit (220) ausgeben.

12. Verfahren nach einem der Ansprüche 10 bis 11, wobei
• die Positionssignale (P0, P90, P180, P270) ein 0°-Positionssignal (P0), ein 90°-Positionssignal (P90), ein 180°-Positionssignal (P180) und ein 270°-Positionssignal (P270) umfassen, die je eine Phasenverschiebung von 90° zueinander aufweisen und jeder Zustandszähleinheit (230, 240, 250, 260) drei Positionssignale (P0, P90, P180, P270) zugeführt sind,
• jede Zustandszähleinheit (230, 240, 250, 260) zwei Komparatoren (231, 232, 241, 242, 251, 252, 261, 262) umfasst, die aus jeweils zwei der drei Positionssignale (P0, P90, P180, P270), die um 90° zueinander phasenverschoben sind, ebenfalls um 90° zueinander phasenverschobene Quadrantenzählwerte generieren.

13. Verfahren nach Anspruch 12, wobei die Komparatoren (231, 232, 241, 242, 251, 252, 261, 262) die Quadrantenzählwerte als Zustandsdatenworte (Z1, Z2, Z3, Z4) der Auswerteeinheit (220) zuführen.

14. Verfahren nach einem der Ansprüche 12 oder 13, wobei jede Zustandszähleinheit (230, 240, 250, 260) einen Zähler (233, 243, 253, 263) umfasst, dem die Quadrantenzählwerte zugeführt sind und der die Signalperioden der Positionssignale (P0, P90, P180, P270) zählt und die Zählerwerte der Zähler (233, 243, 253, 263) als Zustandsdatenworte (Z1, Z2, Z3, Z4) der Auswerteeinheit (220) zuführt.

15. Verfahren nach einem der Ansprüche 10 bis 14, wobei der Überwachungseinheit (200) Ausgangssignale der Positionsmesseinrichtung zugeführt sind und diese in der Auswerteeinheit (220) beim Vergleich mit berücksichtigt werden.

16. Verfahren nach einem der Ansprüche 10 bis 14, wobei
• in der Signalverknüpfungseinheit (210) vier Zustandsdatenworte (Z1, Z2, Z3, Z4) generiert werden,
• die Auswerteeinheit (220) eine erste Auswerteeinheit (220.1) und eine zweite Auswerteeinheit (220.2) umfasst und die erste Auswerteeinheit (220.1) in der Positionsmesseinrichtung (10) und die zweite Auswerteeinheit (220.2) in der Folgeelektronik (100) angeordnet ist,
• der ersten Auswerteeinheit (220.1) und der zweiten Auswerteeinheit (220.2) jeweils zwei der vier Zustandsdatenworte (Z1, Z2, Z3, Z4) zugeführt werden und
• in der ersten Auswerteeinheit (220.1) ein bei einem festgestellten ungültigen Zustand ein erstes Fehlersignal (F1) und in der zweiten Auswerteeinheit (220.2) bei einem festgestellten ungültigen Zustand ein zweites Fehlersignal (F2) generiert wird.

17. Verfahren nach Anspruch 16, wobei die zwei Zustandsdatenworte (Z2, Z4), die in der zweiten Auswerteeinheit (220.2) verglichen werden, dieser über eine Schnittstelleneinheit (22) der Positionsmesseinrichtung (10) und eine Schnittstelleneinheit (110) der Folgeelektronik (100) zugeführt werden.

18. Verfahren nach einem der Ansprüche 16 bis 17, wobei die Zustandsdatenworte (Z2, Z4) die der zweiten Auswerteeinheit (220.2) zugeführt sind, Zählerwerte sind, deren Zählbereich den Messbereich des Positionsmessgeräts (10) umfasst.

## Claims

1. Monitoring unit (200) for monitoring position signals (P0, P90, P180, P270) from incremental position measuring devices, at least two position signals (P0, P90, P180, P270) which result from the scanning of an incremental graduation track (14) by means of a scanning unit (16) and are phase-shifted with respect to one another being applied to the input, having
• a signal combination unit (210) which can be used to generate at least two position-dependent state data words (Z1, Z2, Z3, Z4) from different groups of position signals (P0, P90, P180, P270), and
• an evaluation unit (220) which is supplied with the state data words (Z1, Z2, Z3, Z4) and in which invalid states can be determined by comparing the state data words (Z1, Z2, Z3, Z4) and an error signal (F, F1, F2) can be generated if an invalid state is determined.

2. Monitoring unit (200) according to Claim 1, at least two state counting units (230, 240, 250, 260) being provided in the signal combination unit (210), which state counting units can be used to count state changes of the position signals (P0, P90, P180, P270) and are used to supply the counter values to the evaluation unit (220) as state data words (Z4, Z2, Z3, Z4).

3. Monitoring unit (200) according to one of the preceding claims,
• the position signals (P0, P90, P180, P270) comprising a 0° position signal (P0), a 90° position signal (P90), a 180° position signal (P180) and a 270° position signal (P270) each having a phase shift of 90° with respect to one another, and three position signals (P0, P90, P180, P270) being supplied to each state counting unit (230, 240, 250, 260),
• each state counting unit (230, 240, 250, 260) comprising two comparators (231, 232, 241, 242, 251, 252, 261, 262) which can be used to generate, from two of the three position signals (P0, P90, P180, P270) in each case which are phase-shifted through 90° with respect to one another, quadrant count values which are likewise phase-shifted through 90° with respect to one another.

4. Monitoring unit (200) according to one of the preceding claims, the quadrant count values being supplied to the evaluation unit (220) as state data words (Z1, Z2, Z3, Z4).

5. Monitoring unit (200) according to either of Claims 3 and 4, each state counting unit (230, 240, 250, 260) comprising a counter (233, 243, 253, 263) which is supplied with the quadrant count values and is suitable for counting signal periods of the position signals (P0, P90, P180, P270), and the counter values from the counters (233, 243, 253, 263) being supplied to the evaluation unit (220) as state data words (Z1, Z2, Z3, Z4).

6. Monitoring unit (200) according to one of the preceding claims, output signals from the position measuring device being supplied to the monitoring unit (200) and being concontitantly considered in the evaluation unit (220) during comparison.

7. Monitoring unit (200) according to one of Claims 1 to 5,
• four state data words (Z1, Z2, Z3, Z4) being able to be generated in the signal combination unit (210),
• the evaluation unit (220) comprising a first evaluation unit (220.1) and a second evaluation unit (220.2), and the first evaluation unit (220.1) being arranged in the position measuring device (10) and the second evaluation unit (220.2) being arranged in the downstream electronics (100),
• two of the four state data words (Z1, Z2, Z3, Z4) being respectively supplied to the first evaluation unit (220.1) and to the second evaluation unit (220.2), and
• a first error signal (F1) being able to be generated in the first evaluation unit (220.1) if an invalid state is determined and a second error signal (F2) being able to be generated in the second evaluation unit (220.2) if an invalid state is determined.

8. Monitoring unit (200) according to Claim 7, the two state data words (Z2, Z4) which are compared in the second evaluation unit (220.2) being able to be supplied to the latter via an interface unit (22) of the position measuring device (10) and an interface unit (110) of the downstream electronics (100).

9. Monitoring unit (200) according to either of Claims 7 and 8, the state data words (Z2, Z4) which are supplied to the second evaluation unit (220.2) being counter values, the counting range of which includes the measurement range of the position measuring unit (10).

10. Method for monitoring position signals (P0, P90, P180, P270) from incremental position measuring devices using a monitoring unit (200), the input of which is supplied with at least two groups of position signals (P0, P90, P180, P270) which result from the scanning of an incremental graduation track (14) by means of a scanning unit (16) and are phase-shifted with respect to one another, having the following steps:
• generating at least two position-dependent state data words (Z1, Z2, Z3, Z4) from different position signals (P0, P90, P180, P270) in a signal combination unit (210),
• determining invalid states of the state data words (Z1, Z2, Z3, Z4) by means of comparison in an evaluation unit (220), and
• generating an error signal (F, F1, F2) if an invalid state is determined in the evaluation unit (220).

11. Method according to Claim 10, at least two state counting units (230, 240, 250, 260) being provided in the signal combination unit (210), which state counting units count state changes of the position signals (P0, P90, P180, P270) and output the counter values to the evaluation unit (220) as state data words (Z1, Z2, Z3, Z4).

12. Method according to either of Claims 10 and 11,
• the position signals (P0, P90, P180, P270) comprising a 0° position signal (P0), a 90° position signal (P90), a 180° position signal (P180) and a 270° position signal (P270) each having a phase shift of 90° with respect to one another, and three position signals (P0, P90, P180, P270) being supplied to each state counting unit (230, 240, 250, 260),
• each state counting unit (230, 240, 250, 260) comprising two comparators (231, 232, 241, 242, 251, 252, 261, 262) which generate, from two of the three position signals (P0, P90, P180, P270) in each case which are phase-shifted through 90° with respect to one another, quadrant count values which are likewise phrase-shifted through 90° with respect to one another.

13. Method according to Claim 12, the comparators (231, 232, 241, 242, 251, 252, 261, 262) supplying the quadrant count values to the evaluation unit (220) as state data words (Z1, Z2, Z3, Z4).

14. Method according to either of Claims 12 and 13, each state counting unit (230, 240, 250, 260) comprising a counter (233, 243, 253, 263) which is supplied with the quadrant count values and counts the signal periods of the position signals (P0, P90, P180, P270), and supplies the counter values from the counters (233, 243, 253, 263) to the evaluation unit (220) as state data words (Z1, Z2, Z3, Z4).

15. Method according to one of Claims 10 to 14, output signals from the position measuring device being supplied to the monitoring unit (200) and being concomitantly considered in the evaluation unit (220) during comparison.

16. Method according to one of Claims 10 to 14,
• four state data words (Z1, Z2, Z3, Z4) being generated in the signal combination unit (210),
• the evaluation unit (220) comprising a first evaluation unit (220.1) and a second evaluation unit (220.2), and the first evaluation unit (220.1) being arranged in the position measuring device (10) and the second evaluation unit (220.2) being arranged in the downstream electronics (100),
• two of the four state data words (Z1, Z2, Z3, Z4) being respectively supplied to the first evaluation unit (220.1) and to the second evaluation unit (220.2), and
• a first error signal (F1) being generated in the first evaluation unit (220.1) if an invalid state is determined and a second error signal (F2) being generated in the second evaluation unit (220.2) if an invalid state is determined.

17. Method according to Claim 16, the two state data words (Z2, Z4) which are compared in the second evaluation unit (220.2) being supplied to the latter via an interface unit (22) of the position measuring device (10) and an interface unit (110) of the downstream electronics (100).

18. Method according to either of Claims 16 and 17, the state data words (Z2, Z4) which are supplied to the second evaluation unit (220.2) being counter values, the counting range of which includes the measurement range of the position measuring unit (10).

## Revendications

1. Unité de surveillance (200) destinée à surveiller des signaux de position (P0, P90, P180, P270) de dispositifs de mesure de position incrémentiels, dans lequel au moins deux signaux de position (P0, P90, P180, P270) sont en entrée, lesquels signaux résultent du balayage d'une piste graduée incrémentielle (14) au moyen d'une unité de balayage (16) et qui sont déphasés les uns par rapport aux autres, comprenant
- une unité de combinaison de signaux (210) au moyen de laquelle au moins deux mots de données d'état (Z1, Z2, Z3, Z4) dépendant de la position peuvent être générés à partir de différents groupes de signaux de position (P0, P90, P180, P270), et
- une unité d'évaluation (220) à laquelle sont délivrés les mots de données d'état (Z1, Z2, Z3, Z4), dans laquelle, en comparant comparaison les mots de données d'état (Z1, Z2, Z3, Z4), des états invalides peuvent être déterminés et, lorsqu'un état invalide est établi, un signal d'erreur (F, F1, F2) peut être généré.

2. Unité de surveillance (200) selon la revendication 1, dans laquelle il est prévu dans l'unité de combinaison de signaux (210) au moins deux unités de comptage d'états (230, 240, 250, 260), au moyen desquelles des changements d'état des signaux de position (P0, P90, P180, P270) peuvent être comptés et les valeurs de comptage sont délivrées sous la forme de mots de données d'état (Z1, Z2, Z3, Z4) à l'unité d'évaluation (220).

3. Unité de surveillance (200) selon l'une quelconque des revendications précédentes, dans laquelle
- les signaux de position (P0, P90, P180, P270) comprennent un signal de position à 0° (P0), un signal de position à 90° (P90), un signal de position à 180° (P180) et un signal de position à 270° (P270) qui présentent un déphasage de 90° les uns par rapport aux autres et dans lequel trois signaux de position (P0, P90, P180, P270) sont délivrés à chaque unité de comptage d'états (230, 240, 250, 260),
- chaque unité de comptage d'états (230, 240, 250, 260) comprend deux comparateurs (231, 232, 241, 242, 251, 252, 261, 262) au moyen desquels des valeurs de comptage de quadrants également déphasées de 90° les unes par rapport aux autres peuvent être générées à partir de deux, respectifs, des trois signaux de position (P0, P90, P180, P270) qui sont déphasés de 90° les uns par rapport aux autres.

4. Unité de surveillance (200) selon l'une quelconque des revendications précédentes, dans laquelle les valeurs de comptage de quadrants sont délivrées en tant que mots de données d'état (Z1, Z2, Z3, Z4) à l'unité d'évaluation (220).

5. Unité de surveillance (200) selon l'une quelconque des revendications 3 ou 4, dans laquelle chaque unité de comptage d'états (230, 240, 250, 260) comprend un compteur (233, 243, 253, 263) auquel sont délivrées les valeurs de comptage de quadrants et qui est apte à compter des périodes de signal des signaux de position (P0, P90, P180, P270) et dans lequel les valeurs de comptage du compteur (233, 243, 253, 263) sont délivrées à l'unité d'évaluation (220) sous la forme de mots de données d'état (Z1, Z2, Z3, Z4).

6. Unité de surveillance (200) selon l'une quelconque des revendications précédentes, dans laquelle des signaux de sortie du dispositif de mesure de position sont délivrés à l'unité de surveillance (200) et sont pris en compte dans l'unité d'évaluation (220) lors d'une comparaison.

7. Unité de surveillance (200) selon l'une quelconque des revendications 1 à 5, dans laquelle
- quatre mots de données d'état (Z1, Z2, Z3, Z4) peuvent être générés dans l'unité de combinaison de signaux (210),
- l'unité d'évaluation (220) comprend une première unité d'évaluation (220.1) et une seconde unité d'évaluation (220.2) et la première unité d'évaluation (220.1) est disposée dans le dispositif de mesure de position (10) et la seconde unité d'évaluation (220.2) est disposée dans l'électronique aval (100),
- deux des quatre mots de données d'état (Z1, Z2, Z3, 24) sont respectivement délivrés à la première unité d'évaluation (220.1) et à la seconde unité d'évaluation (220.2), et
- un premier signal d'erreur (F1) peut être généré dans le cas d'un état invalide déterminé dans la première unité d'évaluation (220.1) et un second signal d'erreur (F2) peut être généré en cas d'état invalide déterminé dans la seconde unité d'évaluation (220.2).

8. Unité de surveillance (200) selon la revendication 7, dans laquelle les deux mots de données d'état (Z2, Z4) qui sont comparés dans la seconde unité d'évaluation (220.2) peuvent être délivrés à celle-ci par l'intermédiaire d'une unité d'interface (22) du dispositif de mesure de position (10) et d'une unité d'interface (110) de l'électronique aval (100).

9. Unité de surveillance (200) selon l'une quelconque des revendications 7 à 8, dans laquelle les mots de données d'état (Z2, Z4) qui sont délivrés à la seconde unité d'évaluation (220.2) sont des valeurs de comptage dont la gamme de comptage comprend la gamme de mesure de l'appareil de mesure de position (10).

10. Procédé de surveillance de signaux de position (P0, P90, P180, P270) de dispositifs de mesure de position incrémentiels, au moyen d'une unité de surveillance (200) à laquelle sont délivrés en entrée au moins deux groupes de signaux de position (P0, P90, P180, P270) qui résultent du balayage d'une piste graduée incrémentielle (14) au moyen d'une unité de balayage (16) et qui sont déphasés les uns par rapport aux autres, comprenant les étapes consistant à :
- générer au moins deux mots de données d'état (Z1, Z2, Z3, Z4) dépendant de la position à partir de différents signaux de position (P0, P90, P180, P270) dans une unité de combinaison de signaux (210),
- déterminer des états invalides des mots de données d'état (Z1, Z2, Z3, Z4) en effectuant une comparaison dans une unité d'évaluation (220), et
- générer un signal d'erreur (F, F1, F2) en cas d'état invalide déterminé dans l'unité d'évaluation (220).

11. Procédé selon la revendication 10, dans lequel il est prévu dans l'unité de combinaison de signaux (210) au moins deux unités de comptage d'états (230, 240, 250, 260) qui comptent les changements d'état des signaux de position (P0, P90, P180, P270) et qui délivrent les valeurs de comptage sous la forme de mots de données d'état (Z1, Z2, Z3, Z4) à l'unité d'évaluation (220).

12. Procédé selon l'une quelconque des revendications 10 à 11, dans lequel
- les signaux de position (P0, P90, P180, P270) comprennent un signal de position à 0° (P0), un signal de position à 90° (P90), un signal de position à 180° (P180) et un signal de position à 270° (P270) qui présentent un déphasage de 90° les uns par rapport aux autres et dans lequel trois signaux de position (P0, P90, P180, P270) sont délivrés à chaque unité de comptage d'états (230, 240, 250, 260),
- chaque unité de comptage d'états (230, 240, 250, 260) comprend deux comparateurs (231, 232, 241, 242, 251, 252, 261, 262) qui génèrent respectivement des valeurs de comptage de quadrants également déphasées de 90° les unes par rapport aux autres à partir de deux des trois signaux de position (P0, P90, P180, P270) qui sont déphasés de 90° les uns par rapport aux autres.

13. Procédé selon la revendication 12, dans lequel les comparateurs (231, 232, 241, 242, 251, 252, 261, 262) délivrent les valeurs de comptage de quadrants sous la forme de mots de données d'état (Z1, Z2, Z3, Z4) à l'unité d'évaluation (220).

14. Procédé selon l'une quelconque des revendications 12 ou 13, dans lequel chaque unité de comptage d'état (230, 240, 250, 260) comprend un compteur (233, 243, 253, 263) auquel sont délivrées les valeurs de comptage de quadrants, qui compte les périodes de signal des signaux de position (P0, P90, P180, P270) et qui délivre les valeurs de comptage des compteurs (233, 243, 253, 263) à l'unité d'évaluation (220) sous la forme de mots de données d'état (Z1, Z2, Z3, Z4).

15. Procédé selon l'une quelconque des revendications 10 à 14, dans lequel des signaux de sortie du dispositif de mesure de position sont délivrés à l'unité de surveillance (200) et sont pris en compte dans l'unité d'évaluation (220) lors d'une comparaison.

16. Procédé selon l'une quelconque des revendications 10 à 14, dans lequel
- quatre mots de données d'état (Z1, Z2, Z3, Z4) sont générés dans l'unité de combinaison de signaux (210),
- l'unité d'évaluation (220) comprend une première unité d'évaluation (220.1) et une seconde unité d'évaluation (220.2) et la première unité d'évaluation (220.1) est disposée dans le dispositif de mesure de position (10) et la seconde unité d'évaluation (220.2) est disposée dans l'électronique aval (100),
- deux des quatre mots de données d'état (Z1, Z2, Z3, Z4) sont respectivement délivrés à la première unité d'évaluation (220.1) et à la seconde unité d'évaluation (220.2), et
- un premier signal d'erreur (F1) est généré en cas d'état invalide déterminé dans la première unité d'évaluation (220.1) et un second signal d'erreur (F2) est généré en cas d'état invalide déterminé dans la seconde unité d'évaluation (220.2).

17. Procédé selon la revendication 16, dans lequel les deux mots de données d'état (Z2, Z4) qui sont comparés dans la seconde unité d'évaluation (220.2) sont délivrés à celle-ci par l'intermédiaire d'une unité d'interface (22) du dispositif de mesure de position (10) et d'une unité d'interface (110) de l'électronique aval (100).

18. Procédé selon l'une quelconque des revendications 16 à 17, dans lequel les mots de données d'état (Z2, Z4) qui sont délivrés à la seconde unité d'évaluation (220.2) sont des valeurs de comptage dont la gamme de comptage comprend la gamme de mesure de l'appareil de mesure de position (10).
